# EUROPEAN PATENT APPLICATION

(11) **EP 2 953 084 A1**
(43) Date of publication of application: **09.12.2015**
(21) Application number: 15170793.2
(22) Date of filing: 05.06.2015
(51) Int. Cl.: G06Q 30/02, G06Q 20/32

(54) **SOCIAL NETWORK MESSAGING WITH INTEGRATED ADVERTISING**

(30) Priority: 05.06.2014 US 201462008203 P
(71) Applicant: Riavera Corp., Toronto, Ontario M5A 4N3 (CA)
(72) Inventor: Itwaru, Mark, Toronto, Ontario M9A 1R4 (CA)
(74) Representative: Siecker, Eric Johannes

(57) **Abstract**

A method for associating an advertisement with a particular message of a social media network, the method comprising the steps of: receiving message content of the message from a member of the social media network; analyzing the message content to identify content data; compare content data with data portions of a plurality of advertisements for a match there-between; selecting the advertisement based on a determined match between the content data and the respective data portion of the advertisement; and including the advertisement with the message content for subsequent access of the message by another member of the social media network.

## Description

### FIELD

The present invention relates to systems and methods for social network messaging.

### BACKGROUND

Social network notification streams well used by a large number of people across the planet in today's society. Social network notification streams, or messages, are updates, of any kind, that a member of a social network receives from other members of the social network (i.e. Tweets, status updates photo-sharing etc.) They can be in the form of text, banner ads, photographs, images and/or video). For example, over 500 million photos are shared a day and hundreds of millions of other types of social network notification streams, however none of which are currently monetizeable in a way that reflects personalization of social network users and/or advertisers in connection with the messages themselves. In fact, currently all social network notifications are passive messages, intended to simply be viewed and commented on by members of the social network.

As such, there exists a commercial opportunity of using social network notification streams as an advertising medium. As such, there exists a commercial opportunity of providing services in a manner that facilitates the social network member, the social network and advertisers to derive revenue from the use and popularization of the social media messaging.

### SUMMARY

It is an object of the present invention to provide a system for integrating advertising in social network messages shared between members of the social network.

One aspect provided is a method for associating an advertisement with a particular message of a social media network, the method comprising the steps of: receiving message content of the message from a member of the social media network; analyzing the message content to identify content data; compare content data with data portions of a plurality of advertisements for a match there-between; selecting the advertisement based on a determined match between the content data and the respective data portion of the advertisement; and including the advertisement with the message content for subsequent access of the message by another member of the social media network.

### BRIEF DESCRIPTION OF THE DRAWINGS

Exemplary embodiments of the invention will now be described in conjunction with the following drawings, by way of example only, in which:
Figure 1 is a block diagram of a advertising system;
Figure 2 is a block diagram showing an example message, advertisement and incentive of Figure 1; and
Figure 3 is a block diagram showing an example configuration of a computer device of Figure 1.

### DESCRIPTION

The claimed invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the claimed invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the claimed invention is provided below along with accompanying figures that illustrate the principles of the invention. The claimed invention is described in connection with such embodiments, but the claimed invention is not limited to any embodiment. The scope of the claimed invention is limited only by the claims and the claimed invention encompasses numerous alternatives, modifications and equivalents. Numerous specific details are set forth in the following description in order to provide a thorough understanding of the claimed invention. These details are provided for the purpose of example and the invention may be practiced according to the claims without some or all of these specific details. For the purpose of clarity, technical material that is known in the technical fields related to the claimed invention has not been described in detail so that the claimed invention is not unnecessarily obscured.

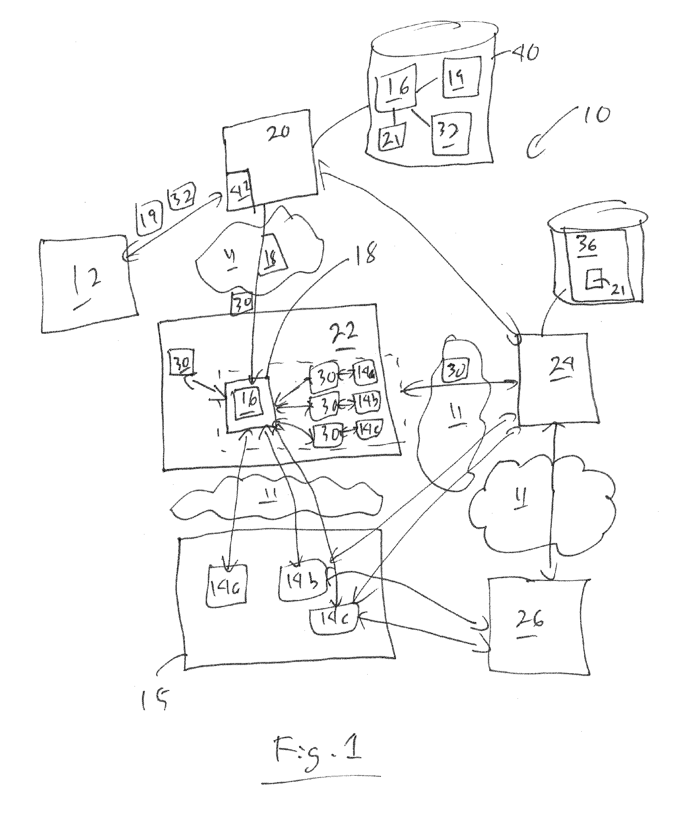

Referring to Figure 1, a computer implemented social messaging advertisement system 10 provides an advantage for advertisers 12 to interact dynamically with members 14a,b,c of a social network 15 by dynamic insertion of advertisements 16 into social network messages 18, via cooperation between an advertising service 20 and a messaging service 22 of the social network 15. The advertisements 16 can include incentives 21 that can be attributed to a financial account 36 of the member 14a,b,c managed by an incentive service 24. For example, the incentive service 24 can be referred to as a cloud wallet used by each of the members 14a,b,c to collect, store, and redeem incentives 21 contained in incentive information of the advertisement 16 as further described below.

The advertisements 16 and related incentives 21 are associated with products offered by merchants of the marketplace 26. In economics, economic output is divided into goods and services. When an economic activity yields a valuable or useful thing, it can be known as production output of the totality of products (e.g. goods or services) in an economy that the merchant makes available for use by the consumers (e.g. members 14a,b,c). Products as goods can range from a simple safety pin, food, clothing, computer components to complex machinery and electronic or physical media (physical or electronic versions of music, print media, etc.). Products as services are the performance of any duties or work for another (e.g. helpful or professional activity) and can be used to define intangible specialized economic activities such as but not limited to: providing access to specific information; web services; transport; banking; legal advice; accounting advice; management consultant advice; and medical services. The merchant providing the products can be a businessperson or individual engaged in wholesale/retail trade, an organization, an administration, and/or a business that sells, administers, maintains, charges for or otherwise makes available product(s) that are desirable by the consumers. Therefore, it is recognized that the products may be made available to the consumer for purchase and/or for free. One example of a "free" product is a trial subscription to a web service.

Accordingly, the merchant can be one person, or an association of persons, for the purpose of carrying on some enterprise or business; a corporation; a firm; etc. Further, it is recognised that the products can be related to company activities not related to specific product(s), for example consumer service, community activities, donations, and/or sponsorships. These general activities of the merchant are also considered as part of the definition of merchant products.

The social network messages 18 can be referred to as social network notification streams that are sent and viewed between members 14a,b,c of the social network 15. Example content 17 of the messages 18 (e.g. blogging with posts, etc.) can be photos, text, etc. One example of messages 18 is for Twitter (an online social networking and microblogging service 22) that enables users to send and read short 140-character text messages, called "tweets". Facebook is another example of the online social networking service 22 to facilitate the exchange of messages 18 by members 14a,b,c posting to their wall, etc. It is also recognised that the upload of message content 17 to a central online content sharing platform, provided by the social messaging service 22, can also be considered as a form of messages 18. For example, uploading of photos or other multimedia content to photo sharing sites 22 (e.g. Flickr), video sharing sites 22 (e.g. Youtube) can also be considered sending of messages 18 for viewing by members 14a,b,c.

The social networking service 22 can be referred to as a platform facilitate social networks or social relations among members 14a,b,c who, share interests, activities, backgrounds or real-life connections. A social network service 22 can include of a representation of each user (often a profile 30), member social links, and a variety of additional services. Social networking can be web-based (e.g. network 11) services that allows individual members 14a,b,c to create a public profile, to create a list of user members 14a,b,c with whom to share connection/messages 18, and view and cross the connections/messages 18 within the social network 15. Most social network services 22 are web-based and provide means for members 14a,b,c to interact over the Internet, such as e-mail and instant messaging 18. Social network sites 15 are varied and they incorporate new information and communication tools such as, mobile connectivity, photo/video/sharing and blogging of messages 18. Online community services are sometimes considered as a social network service 22, though in a broader sense, social network service 22 can mean an individual-centered service whereas online community services are group-centered. Social networking sites 15 can provide members 14a,b,c to share ideas, pictures, posts, activities, events, interests in the form of messages 18 with people in their social network 15.

The main types of social networking services 22 can be those that contain category places (such as former school year or classmates), means to connect with friends (usually with self-description pages), and a recommendation system linked to trust. Popular methods now combine many of these, with American-based services 22 such as Facebook, Google+, YouTube, Linkedln, Instagram, Pinterest, Tumblr and Twitter widely used worldwide; Nexopia in Canada; Badoo, Bebo, Vkontakte (Russia), Delphi (also called Delphi Forums), Draugiem.lv (mostly in Latvia), Hi5 (Europe), Hyves (mostly in The Netherlands), iWiW (mostly in Hungary), Nasza-Klasa, Soup (mostly in Poland), Glocals in Switzerland, Skyrock, The Sphere, StudiVZ (mostly in Germany), Tagged, Tuenti (mostly in Spain), and XING in parts of Europe; Hi5 and Orkut in South America and Central America; Mxit in Africa; and Cyworld, Mixi, Orkut, renren, weibo and Wretch in Asia and the Pacific Islands.

As such, social media networks 15 expressed via the messaging services 22 provide for the social interaction among people in which they create, share or exchange information and ideas as messages 18 in virtual communities and networks. Social media networks 15 can be defined as a group of Internet-based applications that build on the ideological and technological foundations of Web 2.0, and that allow the creation and exchange of user-generated content. Furthermore, social media can use mobile and web-based technologies to create highly interactive platforms through which individuals and communities share, co-create, discuss, and modify user-generated content. As such, the members 14a,b,c can be provided as communication between organizations, communities, and/or individuals.

The members 14a,b,c can communicate/interact with their respective social network messages using the messaging service 22 over a communications network 11 (e.g. the Internet). The advertisers 12 can communicate with the advertising service 20 and also with the messaging service 22 via the communications network 11. The messaging service 22 and members 14a,b,c can also communicate with the incentive service 24 over the communications network 11. Further, the incentive service 24 can communicate with one or more financial institutions (not shown) either directly, or on behalf of, merchants (not shown) (all collectively shown as marketplace 26) to coordinate the redemption of the incentives with the merchants offering merchandise/services to the members 14a,b,c, such merchandise/services which can be obtained either in whole or in part by redeeming the incentives obtained from the incentive information with the merchants. It is recognised that functionality expressed by different computers 101 of the system 10 can be partitioned and/or shared between the different services 20,22,24 hosted thereon, as further described below.

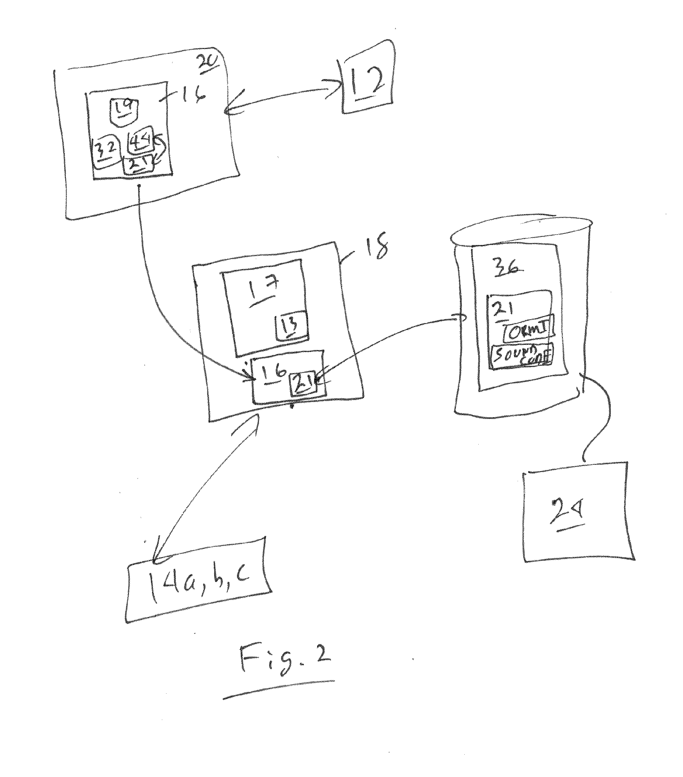

Referring to Figure 2, the social network message 18 shared (e.g. using the messaging platform provided by the messaging service 22 via the communications network 11) between members 14a,b,c of the social network 15 contains the advertisement 16 inserted in the social network message drafted and sent by one of the members 14a (e.g. sending member) for viewing by other members 14b,c (e.g. receiving member) of the social network 15. The social network message 18 also contains message content 17 (e.g. image data or links for image content such as still images, video such as video clips; textual content such as text, tagged content such as hash tags; geo-tagged data such as GPS coordinates or other text associated with a specific geographic location such as the word Toronto, High Park, etc; hyperlinks to other content available on the communications network 11; etc.). As mentioned below, the advertising service 20 can use the message content 17 to systematically match the social network message 18 with a predefined advertisement 16 created and stored in a storage 40 by the advertisers 12, by determining a portion of the message content 17 that also matches a portion 19 of the predefined advertisement 16. For example, a portion of the message content 17 could be text (or tags) as a key phrase or key term (e.g. coffee) that is the same as the key phrase or key term (e.g. coffee) of the portion 19 of the predefined advertisement 16. For example, a portion of the message content 17 could be location data (e.g. GPS data) that is the same as the location data 19 of the portion of the predefined advertisement 16, as a specific example the GPS data contained in the message content 17 could match a geographical vicinity of a particular merchant.

As further discussed below, the members 14a,b,c can each have a member profile 30 that can be associated by the social network 15 with the social network message 18. The member profile 30 can have one or more demographic profile parameters registered with the messaging service 22 and thereby accessible by the advertising service 20. As such, one example is where the advertisement service 20 uses the match between the portion of the message content 17 and the portion 19 of the predefined advertisement(s) 16 to associate and insert the matching advertisement(s) 16 into the message 18 of the sending member 14a for subsequent interaction by the receiving/viewing members 14b,c. Alternatively, another example is where the advertisement service 20 uses both 1) the match between the portion of the message content 17 and the portion 19 of the predefined advertisement(s) 16 and 2) match between profile parameters of the profiles 30 the members 14a,b,c with advertisement profile parameter(s) 32 to associate and insert the matching advertisement(s) 16 into the message 18 of the sending member 14a for subsequent interaction by the different receiving/viewing members 14b,c.

For example, when viewing the message 18 by member 14b having a first member profile 30 having a first demographic parameter (e.g. male), the messaging service 22 would display a first advertisement 16 to the member 14b having a profile parameter 32 matching the first demographic parameter as well as the match with portion 19. However when viewing the same message 18 by member 14c having a different second member profile 30 having a second demographic parameter (e.g. female), the messaging service 22 would display a different second advertisement 16 to the member 14b. One specific example of this is where the matching portion 19 could be geo-location of a restaurant with the message 18, however the specific restaurant advertisement 16 shown to the viewing member 14b would be for considered male-oriented foods and the different specific restaurant advertisement 16 shown to the viewing member 14c would be for considered female-oriented foods. It is also recognised that one or more of the services 20,22,24 can coordinate generation of an individualized incentive 21 (customized for the particular member 14a,b,c) based on the member profile 30 information available to the service(s) 20,22,24. The generated incentive 21 would be stored in the financial account 36 of the member 14a,b,c and redeemable by the member 14a,b,c at the respective merchant(s) of the marketplace 26.

Referring again to Figure 1, system 10 is directed to computer-implemented, matching-based methods monitored or otherwise managed by the messaging service 24 for matching and connecting a predefined advertisement 16 (represented by a published or otherwise defined advertisement 16 registered with the advertisement service 20) and a social network message 18 through the use of a mobile communication device 101 for the members 14a,b,c sending and viewing messages 18 with one another via the social network 15. The message 18 - advertisement 16 matching can be conducted using real-time and predefined data comparison including real-time geographical location (e.g. message content 17) of the mobile device 101, the geographical location (e.g. advertisement portion 19) of the merchant, a predefined profile 32 of the advertisement 16 having a plurality of advertisement parameters, and a predefined member profile 30 having a plurality of member parameters (e.g. demographic information). Using the real-time and/or predefined data by the messaging service 22 for example in cooperation with the advertisement service 20, a match representing a suitable advertisement 16 for the message 18 is determined (e.g. by the messaging service 22 or on behalf of the messaging service 22 by the advertisement service 20). For example, it is recognised that the member 14a,b,c can be determined as in the geographical vicinity of the merchant associated with the advertisement 16.

Referring again to Figure 1, social network notification streams (hereinafter referred to as messages 18) can be updates, of any kind, that a member 14a,b,c of the social network 15 receives or otherwise accesses via the social network messaging service 22 from other members 14a,b,c of the social network (i.e. Tweets, status updates, photo-sharing, blog posted content, etc.) the message content 17 can be in the form of text, banner ads, photographs, images and/or video). The messages 18 can be posted with the use of a hash tag, which can make posts 18 searchable. As such, the messages 18 shared between members 14a,b,c can be monetizeable through insertion of and subsequent access/interaction with the advertisements 16. As such, the social network notifications 18 of the system 10 can be considered active messages 18, intended to be viewed and commented on by members 14a,b,c of the social network 15 in combination with accessing any incentives 21 (and storing same in their financial account 36) expressed by the inserted advertisements 16 also associated in the messages 18.

In general, the system 10 has the advantage of providing a commercial opportunity by the advertisers 12, and associated merchants of the market place 26, of using messages 18 as advertising mediums that facilitates the exploitation of messages 18 for the use of interactive advertising. The system 10 also has the advantage of providing the commercial opportunity of facilitating the social network member 14a,b,c, the social network 15 and advertisers 12 to derive revenue from the use and popularization of the system 10. The system 10 includes a number of components: message content 17 portions matchable with portions 19 of the advertisement 16 to facilitate selection (optionally including matching of advertisement profile 32 with member profile 30 parameters) and insertion of predefined advertisements 16 into the message 18, an advertising service 20, an advertising portal or interface 42 used by the advertisers to access the advertising service 20 and create/design the advertisements for storage in the storage 40 for subsequent use in matching and insertion into selected messages 18, a Cloud Wallet also referred to as a financial account 36 coordinated by the financial service 24 in cooperation with the messaging and/or advertisement service(s) 20,22, and a merchant system (e.g. POS terminal, online store, etc) of the marketplace 26.

Referring to Figure 1, the advertising portal/interface 42 of the advertising service 20 provides functionality to the advertisers 12 to create and configure advertisements 16 to include incentives 21 (e.g. deals and offers of varying types such as coupons, scratch and win, request to purchase, 2 for 1 etc.) that can be generated and downloaded into the financial account 36 of the member 14a,b,c when they interact with the respective advertisement 16 contained in the message 18. An example of association of the advertisement 16 with a particular message 18 is the display of an advertisement icon in the message 18 along with other portions of displayable message content 17. Therefore the viewing member 14a,b,c of the message 18 has knowledge of a potential advertisement 16 associated with the particular message 18 and can access the incentive(s) 21 of the advertisement 16 through interaction with the displayed/presented icon. It is recognised that the computer icon of the advertisement 16 can be a pictogram displayed on the computer screen of the member device 101 in order to help member 14a,b,c navigate the computer system of the (e.g. mobile) device 101 in a similar way traffic signs are used to help a driver navigate access to and generation of the specific incentive 21 for storing in the financial account 36 of the member 14a,b,c. for example, the icon presented by the messaging service 22 running a program for viewing of the messages 18 can be part of the graphical user interface provided by the social network 15 but can also be involved as part of or substituted by a text-based interface for use. The member 14a,b,c can activate the icon (e.g. advertisement indicator) using a mouse, pointer, finger, motion, and/or voice commands. The placement on the screen, also in relation to other icons, can provide further information to the member 14a,b,c about their usage. In activating an icon, the member 14a,b,c can move directly into and out of the identified function without knowing anything further about the location or requirements of the file or code associated with the incentive 21, as implemented by the one or more services 20,22,24 for a result of generating and storing of the customized incentive 21 into the financial account 36 of the member 14a,b,c for subsequent use in redemption in the market place 26 (e.g. online marketplace, physical presentment at POS in the marketplace, etc.).

In using the partial 42, the advertisers 12 can create and configure advertisement campaigns, including the actual advertisement information, matchable advertisement portions 19 as defined, matchable profile parameters 32 as defined, and specific redemption format 44 of the incentives 21, as further described below. As such, using the one or more actual advertisement information, matchable advertisement portions 19 as defined, matchable profile parameters 32 as defined, and/or specific redemption format 44 of the incentives 21 components of the advertisement 16 (see Figure 2), the advertisers 12 can create and provide for redemption of demographically target ads 16, geographically target ads 16, target ads 16 as per the predefined portions 13 of the message content 17 (e.g. keyword data 13, GPS data 13, tag data 13, etc.), and set and maintain budgets associated with message 18 selection (via matching as described), incentive 21 generation, and incentive 21 usage by members 14a,b,c. It is recognised as one example, the predefined portions 13 can be geo-tagged data 13 and/or manually tagged text 13 (e.g. hash tags 13) appended to the message 18 by the member 14a,b,c directly and/or by the messaging service 22 during creation and/or sending of the message 18 from the sending member 14a,b,c, which corresponds (via the one or more portions 19,32 of the advertisement 16) to one or more configured advertisements 16 residing in the storage 40 of the advertising service 20.

Referring again to Figure 1, the advertising service 20 can communicate with a social network 15 via its messaging service 22 over the communications network 11. It is also recognised that the advertising service 20 and the messaging service 22 can be hosted by the same social network 15 (e.g. on the same server computer 101 or interconnected server computers 101 via a local area network) As such, the functionality expressed by the services 20,22 can be integrated into a single service (e.g. accessed by both the members 14a,b,c and the advertisers 12) or can be partitioned into separate service 22 and service 20 for access respectively by the members 14a,b,c or the advertisers 12. An example of a partitioned services 20,22 is where the messaging service 22 receives the message content 17 generated by the sending member 14a on their computer device 101 (over the communications network 11) and then provides or otherwise makes available (e.g. via service 20 requests) to the advertising service 20 the message content 17 and/or the member profile 30 over the communications network 11, for subsequent use in matching an advertisement 16 (e.g. in storage 40) with the message content 17 and/or the member profile 30 for insertion into the message 18 by the messaging service 22 for subsequent display and interaction by the viewing members 14b,c.

Alternatively, an example of a non-partitioned and therefore integrated services 20,22 is where the messaging service 22 receives the message content 17 generated by the sending member 14a on their computer device 101 (over the communications network 11) and then provides or otherwise makes available (e.g. via service 20 requests) to the advertising service 20 the message content 17 and/or the member profile 30 hosted by the social network 15 (e.g. same server 101 or local network of connected servers 101). Similarly, the advertising service 20 uses the message content 17 and/or the member profile 30 for subsequent use in matching an advertisement 16 (e.g. in storage 40) with the message content 17 and/or the member profile 30 for insertion into the message 18 by the messaging service 22 for subsequent display and interaction by the viewing members 14b,c.

It is further recognised that in generation of the incentive 21 as optionally customized for a particular viewing member 14b,c, the service(s) 20,22 can be configured to use profile parameters of the viewing member 14b,c (e.g. demographic parameters, geo-location parameters such as associated with the device 101 of the viewing member 14a,b,c, or other parameters associate with the particular viewing member 14b,c.) to generate the content and/or format 44 of the incentive 21 for downloading and storage in the financial account 36 of the viewing member 14b,c.

As such, based matches between the portion data 13 of the message content 17, the profile data 30, and/or and the advertisement portions 19,32, the system 10 is configured to deliver targeted, member profile specific ads 16 and/or generic ads 16 (e.g. interactive) to members 14a,b,c of a social network 15 when viewing the message 18 and interacting with the advertisement indicator (e.g. icon) in the message 18 that is associated with the advertisement 16 and related incentive 21.

In terms of generating the incentive 21 (e.g. customized, generic, etc.) for storage in the member financial account 36, the content and/or format 44 of the stored incentive 21 (e.g. having form and content redeemable with the merchant for a selected product/service by the member 14a,b,c) can be generated by any of the services 20,22,24, based on determined interaction of the member 14a,b,c with the icon of the advertisement 16 and subsequent member 14a,b,c interest in obtaining a redeemable incentive 21 in the financial account 36 for subsequent use in purchasing/acquiring a merchant product/service from the marketplace 26.

It is also recognised that the advertising service 20, the messaging service 22 and/or the financial service 24 can be hosted by the same social network 15 (e.g. on the same server computer 101 or interconnected server computers 101 via a local area network) As such, the functionality expressed by the services 20,22,24 can be integrated into a single service (e.g. accessed by both the members 14a,b,c and the advertisers 12) or can be partitioned into separate service 22 and service 20 and service 24 for access respectively by the members 14a,b,c or the advertisers 12 or advertisers 12 and members 14a,b,c as desired.

For example, partitioned services 20,22,24 is where the messaging service 22 determines interaction with the icon of the message content 17 by the viewing member 14b,c on their computer device 101 (over the communications network 11) and then provides or otherwise makes available (e.g. via received service 20,24 requests) to the advertising service 20 the advertisement content (e.g. incentive 21) and/or the member profile 30 over the communications network 11, for subsequent use in generating the form and content 44 of the incentive 21 as a redeemable incentive 21 for storage in the account 36 of the viewing member 14b,c. The messaging service 22, on behalf of the advertisement service 20 if forwarded to the messaging service 22 from the advertisement service 20 over the communications network 11), would forward the generated incentive 21 to the financial service 24 over the communications network 11 for subsequent storage in the financial account 36.

Alternatively, partitioned services 20,22,24 can be where the messaging service 22 determines interaction with the icon of the message content 17 by the viewing member 14b,c on their computer device 101 (over the communications network 11) and then provides or otherwise makes available (e.g. via received service 20,24 requests) to the advertisement service 20 the advertisement content (e.g. incentive 21) and/or the member profile 30 over the communications network 11, for subsequent use in generating the form and content 44 of the incentive 21 as a redeemable incentive 21 for storage in the account 36 of the viewing member 14b,c. The advertisement service 22 would forward the generated incentive 21 to the financial service 24 over the communications network 11 for subsequent storage in the financial account 36.

Alternatively, partitioned services 20,22,24 can be where the messaging service 22 determines interaction with the icon of the message content 17 by the viewing member 14b,c on their computer device 101 (over the communications network 11) and then provides or otherwise makes available (e.g. via received service 20,24 requests) to the financial service 20 the advertisement content (e.g. incentive 21) and/or the member profile 30 over the communications network 11, for subsequent use in generating the form and content 44 of the incentive 21 as a redeemable incentive 21 for storage in the account 36 of the viewing member 14b,c. The financial service 22 would generate the incentive 21 and store in the financial account 36.

Alternatively, an example of a non-partitioned and therefore integrated services 20,22,24 is where the messaging service 22 determines interaction with the icon of the message content 17 by the viewing member 14b,c on their computer device 101 (over the communications network 11) and then provides or otherwise makes available (e.g. via service 20,24 requests) to the service 20,24 the advertisement content (e.g. incentive 21) and/or the member profile 30 hosted by the social network 15 (e.g. same server 101 or local network of connected servers 101). Similarly, the service 20,24 uses the advertisement content (e.g. incentive 21) and/or the member profile 30 for generating the form and content 44 of the incentive 21 as a redeemable incentive 21 for storage in the account 36 of the viewing member 14b,c.

As such, the financial service 24 can be configured to: communicate with the advertising service 20 in order to present, receive and process payment, coupon, loyalty, gift certificate and other redeemable incentives 21 that are specific to a particular advertisement 16 interacted with by the viewing member 14b,c of the message 18 communicated within the social network 15; to facilitate the processing of the redemption of the incentives 21 (e.g. payments, loyalty points, cash back rewards, coupons, gift certificates) and other transactions between, online retailers/merchants and/or bricks and mortar retailers/merchants and/or members and /or advertisers and/or the social network itself that are present and associated with products/services available in the marketplace 26; store member, advertisers, social network and retailer credentials (e.g. profiles 30,32) and payment account information and/or payment account identifiers (e.g. as part of the profiles 30,32 and/or as part of the defined accounts 36) to facilitate transactions between parties (e.g. merchants 12 and members 14a,b,c) as the case may be; communicate with the advertising service 20 in order to facilitate the exchange of member data 30 such as shopping habits, fraud profile, preferences geo-data etc for use in customizing advertisement 16 information, incentives 21, etc; communicate with the merchants in the marketplace 26 (e.g. with point of sale POS terminals) to facilitate the issuance and redemption of the incentives 21 (e.g. coupons, loyalty points, gift certificates, pre-paid gifts, and all other types) when selected by the member 14a,b,c from their financial account 36 for use in paying (e.g. in whole or in part) for the product/service provides by the merchant 12 to the member 14a,b,c in the market place 26.

As noted below, the redeemable incentive 21 can include an optically recognizable code (e.g. barcode, QR code, etc.) and/or a audibly recognisable code as part of the content/format 44 of the incentive 21, such that payment/transaction processing systems of the merchant 12 can recognize and attribute the incentive 21 as part or all of the payment required by the member 14a,b,c in purchasing or otherwise acquiring the product/service from the merchant. For example, the member 14a,b,c can provide the incentive 21 electronically (e.g. via a electronic communication over the network 11) or can manually provide (e.g. as displayed/presented on the computer device 101 of the member 14a,b,c and/or in printed form on paper) to the merchant when in physical proximity to payment/transaction processing systems (e.g. POS terminal) of the merchant 12.

Referring again to Figure 1, the computer implemented system 10 can be operated (via one or more computer processors configured for executing of a set of instructions stored in one or more memories as further discussed below) by the computer(s) 101 of the member 14a,b,c and services 20,22,24 and advertisers 12.

Steps involved can be when selecting and attaching an advertisement 16 to the message 18 (e.g. hash tagged posts). It is recognised that the advertiser 12 has created an add 16 using the Ad Portal 42 and selects the ad portions 19,32 (e.g. tags) on which he/she would like their add to be associated and matched to a message content 17 and/or member profile 30 having data content 13 and/or profile content 30 matching the ad portions 19,32.

For example "#shoes" can be contained in the message as content data 13 and also in the ad 16 as one or more portions 19,32, as identified by the service 20,22,24 as matching (e.g. by comparing the portions 19,32 of the ad 16 with the content data 13 and/or parameters of the profile 30). Optionally an advertiser 16 can have their ad 16 attached to a post 18 by entering their business address as part of the portions 19,32, the system 10 will look up (e.g. by comparing the portions 19,32 of the ad 16 with the content data 13 and/or parameters of the profile 30) the GPS co-ordinates of any message content 17 (e.g. pictures) posted that matches their business address, and attach their ad 16 to all matching message content 17 (e.g. pictures).

The member 14a,b,c of a social network 15 generates the message content 17 including the content data 13 (e.g. takes a picture of shoes and tags it "shoes") and then sends the message 18 containing the message content 17 to the messaging service 22 (e.g. sending member's (e.g. 14a) picture of shoes shows up in the viewing member's notification stream provided by the messaging service 22 of the social network 15. The viewing member (e.g. 14b,c) clicks on the pic 18 and the advertisers' add 16 appears (e.g. as the advertisement indicator such as an icon). The viewing member responds to the add 16. A response can be any of several actions, e.g. a purchase for pickup or delivery, storage of an incentive 21 for redemption later etc. In the case where the redeemable incentive is desired, the service 20,22,24 can generate the redeemable incentive (e.g. generic and/or based/customized on the profile 30 of the viewing member) having the appropriate content/format 44 and store the redeemable incentive 21 in the account 36 of the viewing member. The advertiser 12 can pay the social network 15 for delivering the ad 16 and/or for any action taken by member in response to the ad i.e. a purchase of the product, download of the incentive 21, etc. It can also be configured that the service 20,22,24 can provide financial compensation to the sending member on commission for posting and/or hash tagging the message content 17 that was used for insertion of the advertisement 16 and associated incentive 21 (which was used or not used by the viewing member).

Other embodiments are directed to computer program products or mobile applications comprising a non-transitory, computer readable storage medium having a sequence of instructions which, when executed by the device 101, cause the one or more processors of the device 101 to execute a process for message 18 processing including advertisement 16 insertion and subsequent display and redeemable incentive 21 generation. Embodiments may execute on the mobile device 101, and the same application or a separate application can execute on the other computer devices 101 (e.g. servers) hosting the services 20,22,24. System embodiments may include a single mobile communication device 101 configured to implement method steps as discussed above, e.g., a mobile communication device 101 with the application executing thereon, mobile communication devices 101, the computer devices 101 of the services 20,22,24 and of the advertisers 12 configured or operable to perform any of the functionality (either partitioned or integrated) of the system and associated services 20,22,24 as desired.

The computer device 101 can be provided as a secure enterprise mobile services gateway/server in communication with other devices 101 (e.g. mobile device of the member) over an enterprise network 11 (e.g. Virtual Private Network (VPN) established over the network 11. Preferably, the communications network 11 comprises a wide area network such as the Internet, however the network 11 may also comprise one or more local area networks 11, one or more wide area networks, or a combination thereof. Further, the network 11 need not be a land-based network, but instead may comprise a wireless network and/or a hybrid of a land-based network and a wireless network for enhanced communications flexibility.

In terms of communications on the network 11, these communications can be between computer devices (e.g. device 101) consisting of addressable network packages following a network communication protocol (e.g. TCPIP), such that the communications can include messages 18, profiles 30, advertisements 16, redeemable incentives 21, and/or advertisement portions 19,32 used to configured generation of ads 16, generation of messages 18 with related message content 17, matching and selection of ads 16 (e.g. with included incentive 21) with a particular message 18, and/or generation and redemption of redeemable incentives 2. In some embodiments, the secure enterprise mobile services gateway server 101 can provide access to various enterprise network intranet services.

In general, application software, also known as an application or an app, is computer software designed to help the device 101 user to perform specific tasks or activities via the user interface of their device 101. An application can manipulate text, numbers, graphics, or a combination of these elements via the user interface of the device 101. Examples of application software include enterprise hosted software (e.g. addresses the needs of organization processes and data flow, often in a large distributed environment), graphics software and media players. Applications may be bundled with the computer 101 and its system software, or may be published separately. Application software is contrasted with system software and middleware (e.g. part of the device component and software system), which manage and integrate a computer's capabilities, but typically do not directly apply in the performance of tasks that benefit the user. The system software serves the application, which in turn serves the user.

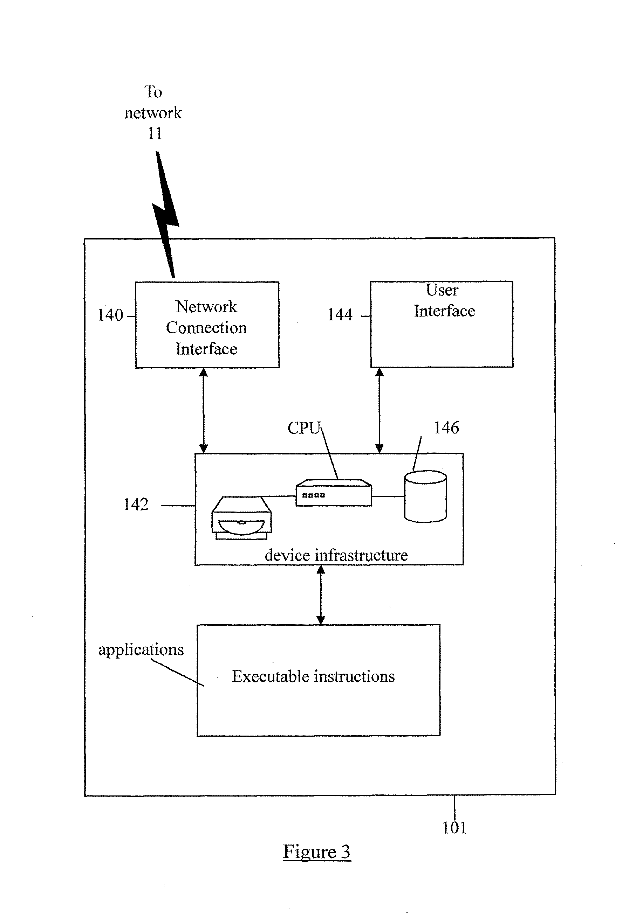

Referring to Figure 3, a computing device 101 implementing some or all of the functionality of the system 10 can include a network connection interface 140, such as a network interface card or a modem, coupled via connection to a device infrastructure 142. The connection interface 140 is connectable during operation of the devices to the network 11 (e.g. an intranet and/or an extranet such as the Internet), which enables networked devices 101 to communicate with each other as appropriate. The network 11 can support the communication of the applications provisioned.

Referring again to Figure 3, the device 101 can also have the user interface 144, coupled to the device infrastructure 142, to interact with a user (e.g. member 14a,b,c). The user interface 144 can include one or more user input devices such as but not limited to a QWERTY keyboard, a keypad, a stylus, a mouse, a microphone and the user input/output device such as an LCD screen display and/or a speaker. If the screen is touch sensitive, then the display can also be used as the user input device as controlled by the device infrastructure 142.

Referring again to Figure 3, operation of the device 101 is facilitated by the device infrastructure 142. The device infrastructure 142 includes one or more computer processors CPU and can include an associated memory 146 (e.g. memory 40 for the service 20, memory of the service 24 for storing the accounts 36, etc.). The computer processor CPU facilitates performance of the device 101 configured for the intended task (e.g. of the respective module(s)) through operation of the network interface 140, the user interface 144 and other application programs/hardware of the device 101 by executing task related instructions. These task related instructions can be provided by an operating system, and/or software applications located in the memory 146, and/or by operability that is configured into the electronic/digital circuitry of the processor(s) CPU designed to perform the specific task(s). Further, it is recognized that the device infrastructure 142 can include a computer readable storage medium coupled to the processor CPU for providing instructions to the processor CPU and/or to load/update the instructions (e.g. applications). The computer readable medium can include hardware and/or software such as, by way of example only, magnetic disks, magnetic tape, optically readable medium such as CD/DVD ROMS, and memory cards. In each case, the computer readable medium may take the form of a small disk, floppy diskette, cassette, hard disk drive, solid-state memory card, or RAM provided in the memory module. It should be noted that the above listed example computer readable mediums can be used either alone or in combination.

Further, it is recognized that the computing device 101 can include the executable applications comprising code or machine readable instructions for implementing predetermined functions/operations including those of an operating system and the modules (e.g. services 20,22,24), for example. The processor CPU as used herein is a configured device and/or set of machine-readable instructions for performing operations as described by example above, including those operations as performed by any or all of the modules (e.g. services 20,22,24). As used herein, the processor CPU may comprise any one or combination of, hardware, firmware, and/or software. The processor CPU acts upon information by manipulating, analyzing, modifying, converting or transmitting information for use by an executable procedure or an information device, and/or by routing the information with respect to an output device (e.g. display, network interface, etc.). The processor CPU may use or comprise the capabilities of a controller or microprocessor, for example. Accordingly, any of the functionality of the modules may be implemented in hardware, software or a combination of both. Accordingly, the use of a processor CPU as a device and/or as a set of machine-readable instructions is referred to generically as a processor/module for sake of simplicity.

Preferably, the communications network 11 comprises a wide area network such as the Internet, however the network 11 may also comprise one or more local area networks 11 , one or more wide area networks, or a combination thereof. Further, the network 11 need not be a land-based network, but instead may comprise a wireless network and/or a hybrid of a land-based network and a wireless network for enhanced communications flexibility. The communications network 11 is used to facilitate network interaction between the devices 101 associated with the services 20,22,24 and the advertisers 12 and the members 14a,b,c and any associated with the merchants of the market place 26. In terms of communications on the network 11, these communications can be between the computer devices 101 consisting of addressable network packages following a network communication protocol (e.g. TCPIP), such that the communications can include compliance characteristic data communicated using appropriate predefined encryption as used by the device infrastructure 142. Further, as mentioned above, the device 101 can be a mobile device (e.g. smartphone, tablet, PDA, etc.) and/or can be a server (e.g. enterprise server) expressing the service(s) 20,22,24 over the network 11 for interaction with each other and the device 101 of the advertisers 12 and the members 14a,b,c.

Referring to Figures 1 and 2, the content/format 44 of the incentive 21 can include an ORMI and/or a sound code, which can be recognised by the financial service 24 and the corresponding payment/transaction processing systems of the merchants and/or other financial institutions of the marketplace 26. For example, a Mobile Image Payment System in the marketplace 26 for mobile commerce provides a Consumer (e.g. member 14a,b,c) to use a mobile device 101 to make payments for online, Electronic Media, Print Media, POS Transactions and the like by using the redeemable incentives 21 from their accounts 36. The Consumer can have scanned an encoded, mobile device scannable image (e.g. optical machine readable image OMRI) that is displayed by the member 14a,b,c via the incentive 21, or provide the sound code data (e.g. as generated by the via the incentive 21), to initiate the transaction of the product. A transaction service via a transaction interface of the marketplace 26 can complete the transaction by processing information between a Payment Client application residing on the Consumer's mobile device 101, a Mobile Payment Interface residing on a Transaction Server (of a transaction service) and optionally a Mobile Payment Application or interface residing on a merchant's device or POS terminal.

One preferable aspect of the disclosed system and method is that the Consumer can have scanned the OMRI 200 using image recording equipment of the merchant (or be within range to identify and record the sound code 3 using sound recording equipment of the user interface of the merchant device) to initiate the transaction.

The present system provides almost any object that can present the OMRI or the sound code data of the incentive 21 to be used to initiate the mobile transaction with a corresponding payment/transaction processing equipment of the merchant. The Consumer can do the following to process the transaction: (1) Launch the application on his/her mobile device 101; (2) present the OMRI displayed or otherwise the sound code data 3by selecting the appropriate incentive 21 from their account 36 (e.g. in interaction with the financial service 24 remotely over the network 11 and/or access the incentive 21 if stored locally in the storage 146 of the member device 101); (3) Select the transaction particulars (e.g., for a purchase, the Consumer can select a preferred payment account select a transaction type such as withdrawal, deposit, account balance, etc.; and select a tip amount); (4) Confirm the transaction; and (5) Optionally, confirm that order fulfillment information can be automatically provided to the merchant by the transaction service of the financing service 24 and/or other services in the marketplace 26. The backend fulfillment process can be handled by the transaction service (e.g., delivery/pickup instructions, payment processing, etc.).

Referring again to Figure 2, the Sound Code can be included in the incentive 21, as part of the content/format 44 of the incentive 21 stored in the account 36, and contain or is otherwise associated with sound-based transaction data and can be used (as a lookup or index identifier (ID)) by the merchant Point of Sale Terminal (e.g. via a merchant application or interface) to be provided by the consumer (e.g. as transmitted by the consumer mobile device 101 and associated application). The Sound Code directly, and/or the sound-based transaction data (if the sound code is processed by the application such that the sound-based transaction data is extracted from the sound code), is received and used by a transaction service to identify transaction information, as mapped in a lookup table. For example, the lookup identifier provided as the sound-based transaction data of "tone A followed by tone B" (as obtained from the sound code) could be received and used by the transaction service to lookup from the lookup table the actual merchant/member credit card number (or other sensitive financial account number), as well as any other merchant/member data including product pricing, shipping instructions that is mapped to the "tone A followed by tone B" identifier, etc. It is also recognized that the application of the consumer device 101 could be configured to decode or otherwise extract the sound-based transaction data from the sound code (once captured by user interface - e.g. microphone) and/or to pass the captured sound code to the transaction service for interpretation and extraction of the sound-based transaction data contained therein by the transaction service.

One example of the sound code is where each sound/tone of the sound code is generated in series much like the bars that are positioned in a traditional bar code. It is also recognized that the absence of tone/sound (or reduced amplitude of tone/sound as compared to adjacent tone/sounds in a sequence or series of tones/sounds) can be used as part of the sound code (e.g. a sound code generated as tone A for 1 second followed by silence for 2 seconds followed by tone B for a half second). The pattern (e.g. combination) of sounds/tones in the sound code can be interpreted (e.g. processed) to extract all of or at least a portion of the sound-based transaction data contained in the sound code. For example, the sound code interpreted as tone A for 1 second followed by silence for 2 seconds followed by tone B for a half second could be translated (e.g. decoded) to represent the actual transaction data (e.g. product name, product description, product price, merchant/member ID) and/or can represent a lookup code for use in looking up the actual transaction data in the lookup table or other lookup table/database available to the devices 101. One example is where the sound code (or at least a portion thereof) interpreted as tone A for 1 second followed by silence for 2 seconds followed by tone B for a half second could be translated as "MERCHANT123" which is then used in the lookup table(s) to identify the merchant information including merchant financial account numbers, merchant shipping instructions, etc. A further example is where the sound code (or at least a portion thereof) interpreted as tone A for 1 second followed by silence for 2 seconds followed by tone B for a half second could be translated as "MEMBER123" which is then used in the lookup table(s) to identify the member information including member financial account numbers, member shipping instructions, etc.

In terms of any financial account number information contained within the sound-based transaction data (either actual or as a reference code used to lookup the information in a lookup table (e.g. in database), this financial account number information would then be provided to and used by financial institutions of the payment processing system to effect transfer of funds from the consumer financial payment account identified by the financial account number retrieved from the lookup table using the one or more portions of the sound code as a lookup identifier. It is recognized that the sound-based transaction data can be included in the generated sound code provided by the merchant interface to the consumer device 101 (e.g. as sound that is generated within reception range of any sound capturing device(s) of the user interface of the consumer device 101). The sound-based transaction data can be incorporated in the sound code (e.g. a sequence/combination of sounds/tone/frequencies/etc. used for example to represent numeric characters and/or alpha characters that are the look-up identifiers used in the table) that is also known to the transaction service as the sound-based transaction data used in identifying the actual payment account information stored and accessible by the transaction interface. Therefore, after providing the sound-based transaction data as a series of sounds/tones directly or indirectly as numeric characters and/or alpha characters to the transaction service, the rest of the purchase transaction process is exactly the same. One advantage in using the sound code is that it works in situations where generating or otherwise scanning/processing the barcode (e.g. a source of barcode-based transaction data) is not feasible by the merchant application and/or the application.

Sound Code- can also be used as a replacement for the generated ORMI as a product identifier (ID) that is received by the merchant Point of Sale Terminal (e.g. via a merchant application or interface) to identify the product that the consumer wishes to obtain from the merchant. The sound code (and/or sound-based transaction data extracted from the sound code) representing the product can be subsequently provided to and used by the transaction service as a replacement/substitution to the ORMI in the transaction process. It is recognized that the sound code can be provided to the merchant interface by the consumer device 101 (e.g. via the payment application), by the transaction interface to the merchant interface for subsequent transmission to any consumer devices 101 within range of the sound code, and/or can be generated directly by the merchant interface for subsequent transmission to the consumer device(s) 101 within reception range of the transmission (e.g. within recognition range of any sound capturing equipment of the consumer devices 101, as related to the content/format 44 pertaining to the sound code in the redeemable incentive 21).

The sound code can be defined as a sound-based combination of one or more sounds or tones that are representative of characters (e.g. numeric characters and/or alpha characters) that can be extracted (e.g. decoded) as the sound-based transaction data from the sound code, and this sound-based transaction data is also known to the transaction Service and/or the merchant interface as the product/merchant data used in identifying the product desired by the consumer. Therefore, after providing the sound code to the merchant application and/or the consumer device 101, and the representative product, merchant, and/or consumer information is extracted as the sound-based transaction data, the rest of the purchase transaction process is similar to that of using the barcode to extract and use the barcode-based transaction data. One advantage in using the sound code is that it works in situations where generating or otherwise scanning/processing the barcode is not feasible by the merchant application and/or the payment application.

Therefore, as further discussed below, for the sake of simplicity, sound-based transaction data (i.e. data obtained from the sound code) and barcode-based transaction data (i.e. data obtained from the OMRI) are hereafter referred to generically as transaction data.

In terms of payment account information accessed via the sound code or ORMI, this information is transaction data that can be defined as sensitive information pertaining to the Payment Account, including but not limited to account holder's name, name of financial institution, account login information, account numbers, account balances, passwords and PIN numbers for accessing the account. It is recognized that the payment account information is used by an payment processing system to access and effect the actual transfer of funds from the identified account of the consumer from the payment account information. It is also recognized that, as further described below, the payment account information is withheld from the point of sale terminal of the merchant and is instead communicated directly between the transaction Service and the consumer and communicated directly between the transaction Service and payment processing system.

Referring again to FIG. 2, as used herein, the term OMRI (e.g. barcode, dataglyph, etc.) refers to an optical machine-readable representation of encoded information or data, presented as an ordered pattern of symbols (e.g. symbology code information in the case of images). The term sound code refers to an audio machine-recordable representation of transaction related information or data, for example presented as an ordered pattern of sounds, tones or other audio-based signals (e.g. audio code information in the case of sounds/tones/etc.).

In terms of barcodes, for example, barcodes can encode information in the widths and the spacing of parallel lines, and may be referred to as linear or 1 D (1 dimensional) symbologies. Barcodes can also encode information in patterns of squares, dots, hexagons and other geometric shapes or symbols within images termed 2D (2 dimensional) matrix codes or symbologies. Typically, although 2D systems use symbols other than bars, they are generally referred to as barcodes as well. Accordingly, barcode images discussed herein for use with a barcode scanner or decoder can refer to either 1 D or 2D barcodes. With conventional monochromatic barcodes, features are typically printed in black on a white background, thereby forming a pattern that is used to form the machine-readable representation of transaction information of the transaction. With color barcodes, the pattern can include any number of colors (typically also including black and white) distinguishable from one another during the barcode decoding process.

In terms of sound codes, for example, sound codes can encode information in the widths (e.g. duration) and the spacing (e.g. timing) of predefined sounds, tones (e.g. audio signals) that can be used as representative of actual transaction data, and may be referred to as 1 dimensional, or multidimensional symbologies in the case where multiple audio signals are overlaid on top of each other (e.g. multiplexed as a method by which multiple audio signals or audio data streams are combined into one sound code over a "shared" medium). Example of multiplexing can be Frequency-division multiplexing (FDM) which achieves the combining of several audio signals into sound code by sending audio signals (e.g. individual sounds/tones) simultaneously in several distinct frequency ranges. Another example is Time-division multiplexing (TDM) involving sequencing groups of the audio signals one after the other, and in such a way that they can be associated with the appropriate receiver as belonging to a respective sound code. Sound codes can also encode transaction data information in patterns of sound, tones suing different durations, start times, end times, frequencies for each of the individual audio signals within the sound code.

The OMRI or sound code can be generated by the appropriate service 20,22,24 for inclusion in the redeemable incentive 21 to include the coded information representing merchant and product content used, for example, to help define product and payment or other transaction terms/details concerning the product(s) made available to the consumer. As discussed further below, the OMRI or sound code can be electronically displayed/played (e.g. on a computer display), can be provided as graphic/audio content (e.g. an image file such as but not limited to a GIF or JPEG) in a network message) and/or can be provided in printed/audio form (e.g. presented on a physical medium such as paper or plastic - for example associated with a picture in a magazine or present on a label). As discussed, interaction between the OMRI or the sound code data and the consumer placing the order for the product(s) can include consumer actions such as but not limited to: selection (e.g. via mouse or other pointer) on the user interface of the consumer device displaying the OMRI or playing the sound code data; receiving the image file containing the OMRI or the audio containing the sound code data; and/or recording/capturing the image of the OMRI or the audio of the sound code data using an imager, microphone respectively, such that the OMRI or the sound code data is provided on physical media and/or electronic media equipment (i.e. an electronic display adjacent to the consumer device 101 or speaker that is in-range of the imager or microphone - e.g. of the merchant). Example environments of the described image/audio capture process would be where the OMRI or the sound code data is displayed/played on a desktop computer (or other audio capable equipment) of the consumer or on a computer terminal (part of the transaction interface) of the merchant. It is also recognized that the consumer can input the sound code data as text input via the user interface of their computer device 101.

In terms of the code information of the OMRI or the sound code, the code information can include a plurality of symbols (i.e. graphical elements) or audio signals (e.g. sounds, tones, etc.) that, as a collection of symbols/audio signals or patterns (e.g. an organized collection of symbols/audio signals forms a legend, or key), represents encoded transaction information that is distinct from the actual unencoded merchant and product information itself. For example, a graphical element (of the coded information) of a black line of a specific width represents a textual element (of the textual information) as the number six, while a different width represents a different textual element (of the textual information) such as the number two. For example, an audio element (of the coded information) of a musical note of middle C of a specific duration represents a textual element (of the textual information) as the number six, while a different duration represents a different textual element (of the textual information) such as the number two. It is recognized that graphical elements can be pictures (e.g. images) of text elements and/or of non-text elements. For example, the audio element "middle C" (e.g. encoded information) in the audio-based coding scheme could be mapped to a product code "1234" (e.g. unencoded information). In another example, the graphical element "low A" (e.g. encoded information) in the audio-based coding scheme could be mapped to a product code "1234" (e.g. unencoded information). For example, the graphical element "6" (e.g. encoded information) in the image-based coding scheme could be mapped to a product code "1234" (e.g. unencoded information). In another example, the graphical element "(*)" (e.g. encoded information) in the image-based coding scheme could be mapped to a product code "1234" (e.g. unencoded information). For simplicity, hereafter image-based coding scheme or audio-based coding scheme are both generically referred to as coding scheme.

The purpose of the coded information is to communicate encoded invoice information (that defines a plurality of invoice parameters) as readable (e.g. decodable) by an image/sound decoder (i.e. image decoder for OMRI and sound decoder for sound codes). The decoder could be present on the consumer device 101 and/or on the transaction service, as further described below. It is recognized that mapping (i.e. processing performed by the decoder or encoder) between the coded information and the unencoded merchant and product information is what enables the OMRI or sound code to be generated and interpreted. A specification of the coded information can include the encoding of the single digits/characters of the textual merchant and product information as well as the start and stop markers into individual symbols (or audio signals) and space (or duration) between the symbols/signals of the symbol/signal collection/pattern, the size of a quiet zone required to be before and after the OMRI, as well as a computation of a checksum incorporated into the OMRI for error checking purposes as is known in the art.

It is recognized that the OMRI may not contain descriptive data, rather the OMRI can be used as containing reference codes (e.g. decoded OMRI information) that a computer uses to look up an associated record that contains the descriptive textual merchant and product information, as well as any other relevant information about the products or items associated with the transaction encoded in the OMRI. For example, the matching item record of the symbology information can contain a description of the product, vendor name, product price, quantity-on-hand, etc., including any of the product data, merchant data, consumer data, and/or transaction data (e.g. transaction type) as further described below. However, some OMRIs can contain, besides reference ID, additional or supplemental information such as product name or manufacturer, for example, and some 2D OMRI may contain even more information as they can be more informationally dense due the greater variation potential of the printed patterns over those of 1 D OMRI.

In terms of the sound code, it is recognized that the sound code data may not contain descriptive data, rather the sound code data can be used as a reference or lookup identifier that a computer uses to look up an associated record that contains the descriptive textual merchant and product information, as well as any other relevant information about the products or items associated with the transaction represented by the sound code data. For example, the matching item record of the sound code data can contain a description of the product, vendor name, product price, quantity-on-hand, etc., including any of the product data, merchant data, consumer data, and/or transaction data (e.g. transaction type) as further described below. However, some the sound codes data can be referenced or otherwise associated with, besides reference ID, additional or supplemental information such as product name or manufacturer.

In terms of different barcode type, linear symbologies (e.g. UPC barcodes as an example symbology format of the OMRI) can be classified mainly by two properties, continuous vs. discrete and two-width vs. many-width. In continuous vs. discrete, characters (i.e. representing the merchant and product information content) in continuous symbologies usually abut, with one character ending with a space and the next beginning with a bar (e.g. light-dark patterns), or vice versa. Characters (i.e. representing textual merchant and product information content) in discrete symbologies begin and end with bars and any intercharacter space is ignored as long as it is not wide enough to look like the code ends. In two-width vs. many-width, bars and spaces in two-width symbologies are wide or narrow, and the exact width of a wide bar has no significance as long as the symbology requirements for wide bars are adhered to (usually two to three times wider than a narrow bar). Bars and spaces in many-width symbologies are all multiples of a basic width called the module, wherein most such codes use four widths of 1, 2, 3 and 4 modules. Some linear symbologies use interleaving, such that the first character (i.e. representing the textual merchant and product information content) is encoded using black bars of varying width. The second character (i.e. representing the invoice data content) is then encoded, by varying the width of the white spaces between these bars. Thus characters (i.e. representing the invoice data content) are encoded in pairs over the same section of the barcode. Stacked symbologies repeat a given linear symbology vertically.

In terms of multidimensional symbologies (e.g. 2D, 3D, etc.), the most common among the many 2D symbologies are matrix codes, which feature square or dot-shaped modules (i.e. representing the merchant and product information content) arranged on a grid pattern. 2-D symbologies also come in circular and other patterns and may employ steganography, thereby hiding modules within an image (for example, using DataGlyphs). Aztec Code is another type of 2D barcode.

Quick Response Codes (QRC) is another a type of matrix barcode (or two-dimensional code) providing faster readability and larger storage capacity compared to traditional UPC barcodes. The QR code (as an example symbology format of the OMRI) consists of black modules arranged in a square pattern on a white background. The information encoded can be made up of four standardized kinds ("modes") of encoded data (e.g. numeric, alphanumeric, byte/binary, and/or Kanji), or by supported extensions virtually any kind of data.

It is also recognized that the coded (e.g. symbology) information of the OMRI can include custom graphical elements (as codified in the coding scheme) involving combinations of one or more graphical elements used to represent a textual element, e.g. a corporate logo is used as a collection of graphical elements (e.g. circle, square, and company name) that is mapped (e.g. decoded) by the coding scheme to represent a textual element (e.g. a URL to a webpage of the company website). Alternatively, the textual element can be mapped (e.g. encoded) by the coding scheme to represent the collection of graphical elements. In this example, the graphical element of a company name (the coded information) is decoded by the coding scheme to represent the text of the URL (the unencoded information). One example of barcodes containing custom graphical elements is Microsoft TM Tag barcodes.

Microsoft TM Tags as an OMRI are another type of barcode, e.g. 2D barcodes, which offer more flexibility than traditional barcode formats both in the barcode design and the content behind it. Because Microsoft Tag barcodes can be linked to data stored on a server, you can deliver a more robust online experience - including entire mobile sites - and update the content any time without having to change the Microsoft Tag. So, if you link a Microsoft Tag on your business card to your resume, it will still be valid after you get that big promotion. Microsoft Tags can be black-and-white or full-color, including custom images (e.g., a company logo). Therefore, the Microsoft Tag can have encoded data in the coded information of the Tag that includes a link (e.g. URL) or other hyperlink that references a location in memory (e.g. in a database) and/or a network address where data content is available/accessible via the encoded link. In other words, a Tag encoder would use a Tag coding scheme to encode the textual link information into corresponding symbology information, e.g. the hyperlink to a website (the textual link information) would be represented as one or more graphical elements such as a company logo or even graphical elements (the symbology information) picturing the product itself.

It is also recognized that the coded information of the OMRI 200 can be encrypted (e.g. using a DES algorithm). In terms of the format of the symbology information, codewords embedded/encoded in the symbology information are typically 8 bits long. It is recognized that the transaction data represented by the symbology information in the OMRI can be broken up into multiple blocks, such that each block includes a number (e.g. 255) of codewords in length.

Another example of an optical machine-readable (e.g. OMRI) representation of encoded information or data are DataGlyphs, which are a new technology for encoding machine readable data onto paper documents or other physical media. They encode information into a number of tiny, individual glyph elements. Each graphical (e.g. glyph) element can consist of a small 45 degree diagonal line as short as 1/100th of an inch or less, depending on the resolution of the printing and scanning that is used, for example. Each glyph element (as the coded information) represents a single binary 0 or 1 (as the decoded textual information), depending on whether it slopes to the left or right. Sequences of these glyph elements (symbology information) can be used to encode numeric, textual or other information (unencoded information).

As an example configuration of the dataglyph symbology and coding scheme, the individual glyphs are grouped together on the page (or displayed electronically on a display), where they form unobtrusive, evenly textured gray areas, like half-toned pictures. One of the reasons for using diagonal glyph elements is because research has shown that the patterns that they form when massed together are not visually distracting. DataGlyph technology allows ordinary business documents to carry thousands of characters of information hidden in these unobtrusive gray patterns that can appear as backgrounds, shading patterns or conventional graphic design elements. Often, their presence will go completely unnoticed. (The entire Gettysburg Address will fit in a DataGlyph about the size of a small US postage stamp). DataGlyph areas can be printed on a document as part of its normal printing process or displayed on a screen as part of the normal image rendering process. The information to be put in the DataGlyphs is encoded as a sequence of individual glyphs, and these can be printed either directly by the encoding software (for instance, by computer laser printer) or via a conventional printing process, such as offset. The glyphs are laid down on a finely spaced rectangular grid so that the area is evenly textured. In addition, each glyph area contains an embedded synchronization lattice or "skeleton" -- a repeating, fixed pattern of glyphs which marks the boundaries of the glyph area and serves as a clocking track to improve the reliability of reading. Before data is placed into the synchronization frame, it's grouped into blocks of a few dozen bytes and error correcting code is added to each block. The amount of error correction to be used is chosen by the application, depending on the expected quality of the print-scan cycle. Higher levels of error correction increase the size of the glyph area needed for a given amount of data, but improve the reliability with which the data can be read back. This can be very important in environments where there's a high level of image noise (for example, fax) or where the documents are subjected to rough handling. As a final step, the bytes of data are randomly dispersed across the glyph area, so that if any part of the glyph area on the paper is severely damaged, the damage to any individual block of data will be slight, and thus easy for the error correcting code to recover. Together, error correction and randomization provide very high levels of reliability, even when the glyph area is impaired by ink marks, staples and other kinds of image damage.

In view of the above description, it is recognized that OMRI can be embodied as barcodes, dataglyphs or other images that contain encoded information that can be decoded into unencoded information (e.g. textual elements) using an appropriate coding scheme that provides a mapping (e.g. rules) between the coded information to into the unencoded information (e.g. the decoding process) and the unencoded information into the coded information (e.g. the encoding process). In any event, the following description, for simplified example explanation purposes only, refers to OMRI as barcodes. However, it is recognized that in the below description, the term barcode can be interchanged with the broader meaning of OMRI, as desired.

In view of the above description, it is recognized that sound code can be embodied using various patterns/combinations of audio signals that are predefined to represent encoded information that can be decoded into unencoded information (e.g. textual elements) using an appropriate coding scheme that provides a mapping (e.g. rules) between the coded information to into the unencoded information (e.g. the decoding process) and the unencoded information into the coded information (e.g. the encoding process.

In view of the above, it is recognized that there can be a variety of different OMRI encoded for different transaction types. For example, the transaction type assigned to the OMRI will determine what portion of the functionality of the transaction application is used by the consumer, and/or provided by the transaction interface or merchant interface, to facilitate processing of the transaction associated with the OMRI.

In view of the above, it is recognized that there can be a variety of different sound code data for different transaction types. For example, the transaction type assigned to the sound code data will determine what portion of the functionality of the transaction application is used by the consumer, and/or provided by the transaction interface or merchant interface, to facilitate processing of the transaction associated with the sound code data.

## Claims

1. A method for associating an advertisement with a particular message of a social media network, the method comprising the steps of:
receiving message content of the message from a member of the social media network;
analyzing the message content to identify content data;
compare content data with data portions of a plurality of advertisements for a match there-between;
selecting the advertisement based on a determined match between the content data and the respective data portion of the advertisement; and
including the advertisement with the message content for subsequent access of the message by another member of the social media network.

2. The method of claim 1 further comprising the step of including an incentive in the advertisement.

3. The method of claim 2, wherein the incentive is a coupon.

4. The method of claim 1, wherein the advertisement is linked in the message content by an icon displayed with the message content.

5. The method of claim 1 further comprising the steps of generating an electronic redeemable incentive from the advertisement when interacted with by the another member and storing the electronic redeemable incentive in a financial account of the another member.

6. The method of claim 5 further comprising the step of including encoded data in the electronic redeemable incentive, wherein the encoded data is used by a merchant for purchasing a product by the another member using the electronic redeemable incentive.

7. The method of claim 6, wherein the encoded data is a sound code.

8. The method of claim 6, wherein the encoded data is an ORMI.
